# EUROPEAN PATENT APPLICATION

(11) **EP 3 575 245 A1**
(43) Date of publication of application: **04.12.2019**
(21) Application number: 19177172.4
(22) Date of filing: 29.05.2019
(51) Int. Cl.: B65G 17/44, B65G 15/14

(54) **FASTENING OF A GRIPPER PAD TO A GRIPPER CHAIN**

(30) Priority: 30.05.2018 IT 201800005862
(71) Applicant: System Plast S.r.l., 24060 Telgate (BG) (IT)
(72) Inventor: GHEZZI, Gabriele, 20099 SESTO SAN GIOVANNI (Milano) (IT)
(74) Representative: Fioravanti, Corrado

(57) **Abstract**

A gripper assembly for a gripper chain comprises a support element (10), a rubber gripper pad (20), and a pin (30) for attaching the gripper to the support element. The pin (30) is made of plastic and has two enlarged portions (33, 35) and a slot (36). At least one tapered surface (35a, 15a) is provided either on an enlarged portion (35) of the pin (30) or on a through-hole (15) of a lug (13) of the support element (10). When the enlarged portion (35) of the pin is pushed into the through-hole (15), the slot (36) allows the enlarged portion (35) to pass through the through-hole (15).

## Description

### Technical field

The present invention refers to the field of transport and conveying chains known as "gripper chains", where there are two conveying chains, each of which follows a closed-loop path, and which provide together at least one segment where a branch of each chain runs parallel to a branch of the opposite chain, in order to grasp, lift and transport items, such as, for example, bottles.

### Prior art

Conveyors of the aforesaid type are typically used to transport items, such as bottles, from one location, for example from a filling station, to another location, such as a packaging station. In some circumstances, the path that items must follow involves a change in level, for example from one level to a higher level within the same plant.

In each of the two chains of a gripper chain system, there is provided a chain, typically a roller chain with vertical axes, having links that are attached to their respective plate support elements, each of which carries a rubber gripper pad, commonly called a "gripper". Each plate support element has a substantially flat vertical surface on the side facing the opposite chain. Each of these support surfaces is attached to a respective gripping pad comprising a body with rubber bristles. The rubber body has a flat base that is held firmly against the vertical wall of the support plate; from the base extend usually three or more parallel rows of resilient protrusions in the shape of fingers or fins.

When two lengths belonging to the two respective chains are placed side by side, the resilient protrusions of the rubber pads facing each other and protruding from the two chains engage on two opposite sides against the objects to be grasped, bend and grasp the item and transport it.

At present, in order to attach the gripper pads to their respective plate support elements, a vertical fastening pin made of steel is used which is passed through a vertical bore obtained through the base of the rubber body, letting the two opposite ends of the pin emerge; these are inserted and held in a pair of lugs provided by a respective plate support element and protruding from the flat and vertical surface thereof. The rubber base of the gripper also has a pair of recesses that serve to accommodate the lugs of the support and are both penetrated by the vertical through-hole for the pin.

The steel pin has a knurling that allows the forced coupling against the inner surface of the hole of one of the lugs, thus holding the base of the body with rubber bristles against the vertical surface of the plate support element.

In industrial environments wherein the temperature is high, the holes in the lugs tend to expand more than the steel of the pins; therefore, after a certain period of use, the stainless-steel pins tend to slide out of the lugs. This causes the gripper pad to detach from the rest of the gripper chain. This phenomenon is accentuated in chemically aggressive work environments.

### Summary of the invention

It is the object of the present invention to remedy the drawbacks discussed above by attaching the grippers to the chain more reliably.

This and other objects and advantages, which will be better understood hereinafter, are achieved, according to the present invention, by a gripper assembly having the features set forth in the accompanying claims.

In summary, a gripper assembly for a gripper chain comprises a support element, a rubber gripper pad, and a pin for attaching the gripper pad to the support element. The support element, made of plastic material, forms a plate with two lugs projecting from one side of the plate and having two respective axially aligned through-holes. The gripper pad forms a base, a through-bore passing through the base, and a plurality of resilient protrusions extending cantilevered from the base. The fastening pin passes through the through-holes of the lugs and the through-bore in the base of the pad. The pin is made of plastic material and has, near a first end of the pin, a first enlarged portion which defines a radial shoulder facing a second end of the pin. At a position spaced from the first enlarged portion, the pin forms at least one second enlarged portion. A through-slot extends axially along the pin through and beyond the second enlarged portion; the through-slot separates two parallel pin segments, which are elastically compressible in a transverse direction. At least one tapered surface is provided either by the through-hole of one of the lugs or by the second enlarged portion, and this tapered surface is configured to cooperate with a surface provided respectively either by the second enlarged portion or by the through-hole so as to compress and bring the two pin segments closer together and allow the second enlarged portion of the pin to pass through the through-hole. In the mounted condition, the first enlarged portion and the second enlarged portion are placed on two opposite sides of one of the lugs.

### Brief description of the drawings

The structural and functional features of a few preferred but non-restrictive embodiments of a gripper assembly for a gripper chain according to the invention shall now be described. Reference is made to the accompanying drawings, wherein:
- Figure 1: is an exploded perspective view of a gripper assembly for a gripper chain according to an embodiment of the present invention;
- Figure 2: is an exploded view of a gripper assembly for a gripper chain in the assembled condition;
- Figure 3: is a side view of the gripper assembly in Figure 2;
- Figure 4: is a cross-sectional view along the line IV-IV of Figure 3;
- Figure 5: is an enlarged scale view of the detail indicated at V in Figure 4;
- Figure 6: is an enlarged scale view of the detail indicated at VI in Figure 4;
- Figure 7: is a view in elevation and enlarged scale of a fastening pin according to an initial embodiment;
- Figure 8: is a view in elevation of the pin of Figure 7 at a different angle;
- Figure 9: is an enlarged scale view of the detail indicated at IX in Figure 7; Figure 10 is a cross-sectional view of a support element with a connection pin according to another embodiment of the present invention;
- Figure 11: is an exploded perspective view of a gripper assembly for a gripper chain according to an embodiment of the present invention;
- Figure 12: is an exploded view of the gripper assembly of Figure 11 in the assembled condition;
- Figure 13: is a side view of the gripper assembly in Figure 12;
- Figure 14: is a cross-sectional view along the line XIV-XIV of Figure 13;
- Figure 15: is another side view of the gripper assembly in Figure 12;
- Figure 16: is a cross-sectional view along the line XIV-XIV of Figure 13;
- Figure 17: is an elevation view of the fastening pin illustrated in Figure 11;
- Figure 18: is an elevation view of the pin of Figure 17 according to a different angle; and
- Figure 19: is an enlarged scale view of the detail shown in a circle in Figure 17.

### Detailed description

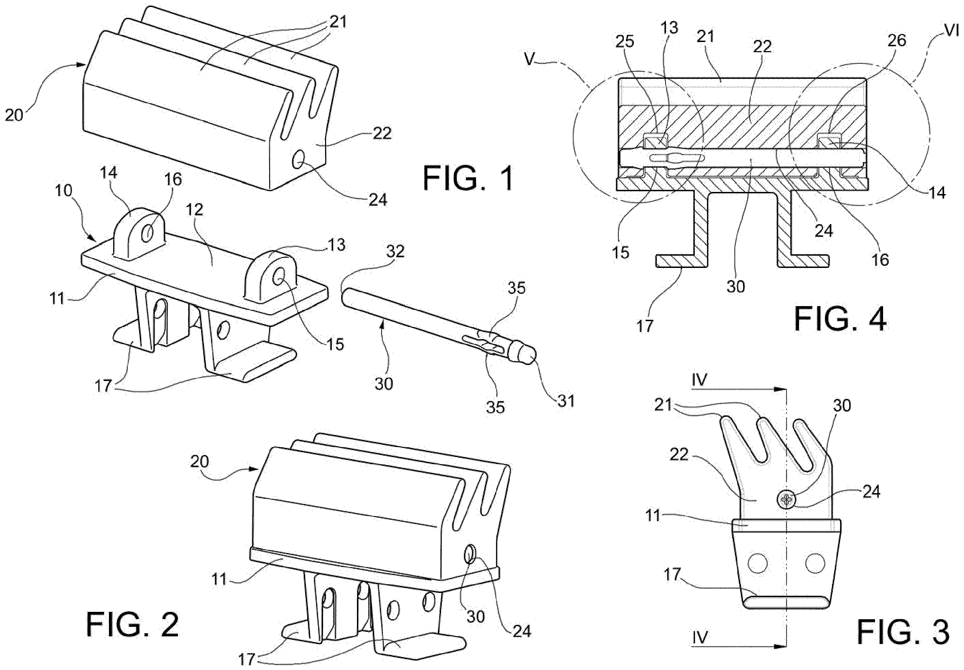

Referring initially to Figure 1, number 10 indicates collectively the plate support element made of plastic material, known per se. The plate support element 10 is mounted on a link of a gripper chain (not shown) and serves to support a rubber gripper or gripper pad 20.

Both the support element 10 and the gripper 20 shown in the figures are to be considered collectively known. Consequently, hereinafter in the present description only those elements of specific importance and interest for the purposes of the implementation of the present invention will be described in detail. For the construction of the parts and elements not shown in detail, reference may be made to any known type of gripper chain system.

The support element 10 forms a substantially vertical plate 11 in use, having a flat, vertical front surface 12 against which a gripper 20 must be held. As understood here, the term "front" is to be understood as referring to a side that will be in use facing an opposite gripping chain and towards the items to be gripped. Conversely, the term "rear" refers to the side facing the chain, typically a roller chain, on the links of which are mounted the plate support elements 10.

Near two respective opposite vertical ends, on the front side of the plate 11 protrude two lugs 13, 14 that have two respective through-holes 15, 16, axially and vertically aligned.

On the opposite or rear side of the plate 11, two brackets 17 may be formed, for example L-shaped, or other connection means or seats that are used to attach each support element to a respective link in a conveying chain. Preferably, the connection means or seats are configured to couple by quick snap-coupling with a respective chain link.

A rubber gripper or gripper pad 20, of a type known per se, has a base 22 from which a plurality of resilient protrusions 21 extend cantilevered, for example in the form of fins or fingers. The shape, number, arrangement and dimensions of the resilient protrusions 21 may vary according to the requirements.

The base 22 has a flat vertical surface 23, which is held against the vertical surface 12 of the support element 10 during use. Through the base 22 a vertical bore 24 is made that opens on a top side and a bottom side of the base.

In the base 22 a pair of vertically spaced recesses 25, 26 may also be made that serve to accommodate the lugs 13, 14 of the support element. These recesses are both penetrated by a vertical bore 24 intended to accommodate a fastening pin 30. Alternatively, according to an embodiment not illustrated, the gripper may be made axially shorter, so as to remain mounted in the position interposed between the two lugs 13, 14. According to this variant, the base 22 of the gripper does not need to have recesses adapted to accommodate the lugs of the support element.

A detachable fastening pin 30, vertical in use, is made of plastic material, preferably polypropylene with glass fiber added. The pin 30 is used to attach the gripper 20 to the support element 10 in a stable but detachable way.

The pin 30 has a vertical length exceeding the distance between the lugs 13, 14. Preferably, the vertical length of the pin 30 is less than the vertical length of the plate 11.

Preferably, the pin 30 has an overall shape and dimensions substantially corresponding to the overall shape and dimensions of the vertical bore 24.

The pin 30 has two opposite ends 31, 32 and a longitudinal axis x. Terms and expressions indicating directions and orientations such as "axial", "radial" or "transverse" shall be interpreted with reference to the axis x.

Near the first end 31, the pin forms a first transversely enlarged portion 33 having an outer surface tapered towards the end 31 of the pin. The first enlarged portion 33 defines a radial shoulder 34 facing the second end 32 of the pin.

In a position spaced from the first enlarged portion 33, the pin 30 preferably forms two second transversely enlarged portions 35 and a through-slot 36 which extends axially into the pin through and beyond the area of the second transversely enlarged portions 35. The slot 36 thus separates two pin segments 38, 39 parallel and elastically compressible in a transverse or radial direction, each of which has one of the two second transversely enlarged portions 35.

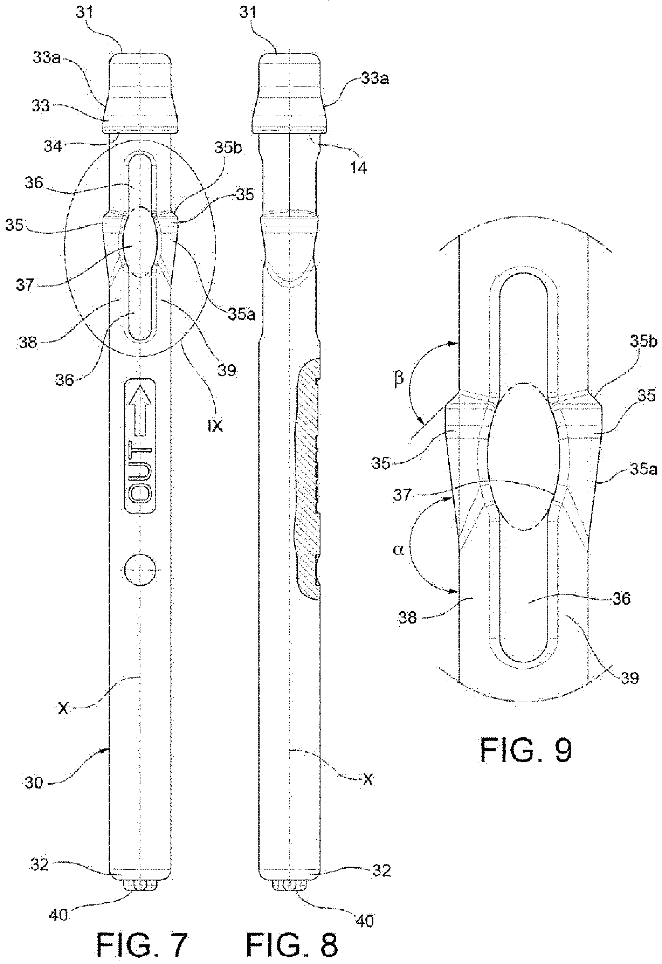

In the embodiment illustrated in Figures 7-9, the through-slot 36 has the shape of a keyhole obtained through the pin adjacent to the first end 31.

According to another embodiment (not illustrated), the pin 30 may have a single second transversely enlarged portion 35, arranged on only one of the two pin segments 38, 39.

The or each second transversely enlarged portion 35 has an outer surface 35a tapered towards the second end 32 of the pin and slightly inclined with respect to the axis x.

Preferably, the or each second transversely enlarged portion 35 also forms an outer surface 35b, more strongly inclined and tapered towards the first end 31 of the pin. The tapered, more inclined surface 35b faces the radial shoulder 34 and is axially spaced therefrom by a distance that slightly exceeds the thickness of one of the two lugs 13, 14.

In the examples shown, the pin 30 is as a whole cylindrical in shape and the tapered surfaces are frusto-conical in shape. In other embodiments (not shown), the pin 30 may have a different cross-section from the circular one, for example square, and the tapered surfaces may be made as ramps or wedges or cams.

In the embodiments illustrated in Figures 1-10, the through-slot 36 may have a widening 37 at the second enlarged portions 35, to facilitate the radial compressibility of the segments 38 and 39.

The gripper assembly is assembled as follows. A pad 20 is first applied to a support element 10. The flat surface 23 of the base 22 of the gripper is placed against the flat surface 12 of the support element 10. The lugs 13, 14 of the support element are accommodated in the recesses 25, 26 of the base 22 of the gripper. The bore 24 that penetrates the base 22 from side to side is axially aligned with the holes 15, 16 of the lugs 13, 14. The fastening pin is inserted into the bore 24 of the base 22 and through the holes 15, 16 of the lugs. The second end 32 of the pin is inserted first. The less inclined outer surface 35a of the second transversely enlarged portions 35 cooperates with the hole 15, forcing the compressible segments 38, 39 to move closer to each other elastically. This elastic deformation allows the second enlarged portions 35 to move closer to each other transversely or radially, so as to enter the through-hole 15 and pass through it, passing through the other side of the lug 13.

When the more inclined outer surface 35b of the second transversely enlarged portions 35 passes through the hole 15, the compressible segments 38, 39 spread out elastically and the second transversely enlarged portions 35 snap-lock in the lug 13 between the first enlarged portion 33 and the second enlarged portions 35.

In the locked position, the lug 13 is comprised between the radial shoulder 34 of the first enlarged portion and the more inclined outer surface 35b of the or each second enlarged position 35. In the locked position, the pin 30 preferably does not protrude vertically from the plate 11.

The fastening pin 30 allows a shape coupling to be obtained, which holds the gripper firmly on its support element. Any differentiated thermal dilatations between the lugs and the pin do not cause the pin to be released. It will be appreciated that the bond thus created does not involve permanent deformations in the components of the gripper and is not sensitive to chemically aggressive environments.

The pin 30 may be released from the support element 10 by pushing the second end of the pin vertically or axially and forcing the more inclined outer surface 35b to cooperate with the hole 15 of the lug 13 to compress and bring the compressible segments 38, 39 of the pin closer together elastically.

Preferably, the inclination β of the outer surface 35b, with respect to the longitudinal axis x of the pin 30, is in a range between about 120° and about 140°.

Preferably, the inclination α of the outer surface 35a, with respect to the longitudinal axis x, is in a range between about 160° and about 175°.

In the assembled condition, the pin cannot protrude axially from the gripper. To indicate to the operators which end of the pin to push to remove it, the second end 32 may bear an identification mark, such as a protrusion or an imprint 40.

In the embodiments illustrated in figures 1 to 9, the pin 30 has enlarged portions 33, 35, with tapered surfaces adapted to cooperate with a cylindrical through-hole 15, obtained in the lug 13 of the support element 10. These embodiments allow advantageously to use a traditional support element 10, which does not require modification.

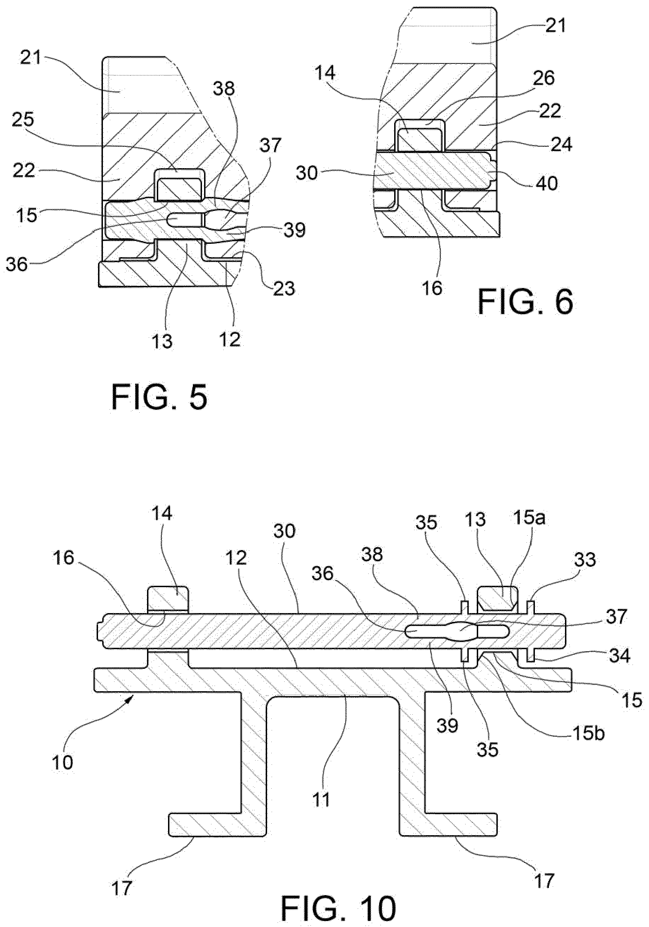

According to a possible alternative embodiment, schematically illustrated in Figure 10, near a first end 31 of the pin 30, the pin has a first enlarged portion 33 that defines a radial shoulder 34 facing a second end 32 of the pin.

In a position spaced from the first enlarged portion 33, the pin 30 preferably forms two second transversely enlarged portions 35 and a through-slot 36 which extends axially into the pin through and beyond the area of the second transversely enlarged portions 35. The slot 36 thus separates two pin segments 38, 39, parallel and elastically compressible in a transverse or radial direction, each of which has one of the two second transversely enlarged portions 35.

According to an embodiment not shown, the pin 30 may have a single second transversely enlarged portion 35, arranged on only one of the two pin segments 38, 39.

The enlarged portions 33, 35 may have a rectangular cross-section.

As shown in Figure 10, the through-hole 15 of the lug 13 may have a conical surface 15a enlarged outwards in an axial direction. By inserting the pin in the hole 15, the or each second enlarged portion 35 cooperates with the conical surface 15a, which compresses the two pin segments 38, 39 and brings them together transversely, clinching them. By continuing to push the pin 30 in the direction of the lug 14, the second enlarged portions 35 go beyond the hole 15 and, emerging therefrom, snap out, axially locking the lug 13 between the first 33 and the second 35 enlarged portions of the pin. In this condition, the second end 32 of the pin is beyond the hole 16 of the lug 14.

Preferably, the through-hole 15 of the lug 13 has a conical surface 15b enlarged towards the lug 14. The pin 30 may be released from the support element 10 by pushing the second end 32 of the pin axially and forcing the second enlarged portions 35 to cooperate with the conical surface 15b of the hole 15 of the lug 13 to compress and bring the compressible segments 38, 39 of the pin closer together elastically.

Preferably, the conical surface 15a is tapered with respect to the longitudinal axis x with an inclination less than the inclination of the conical surface 15b with respect to the same axis.

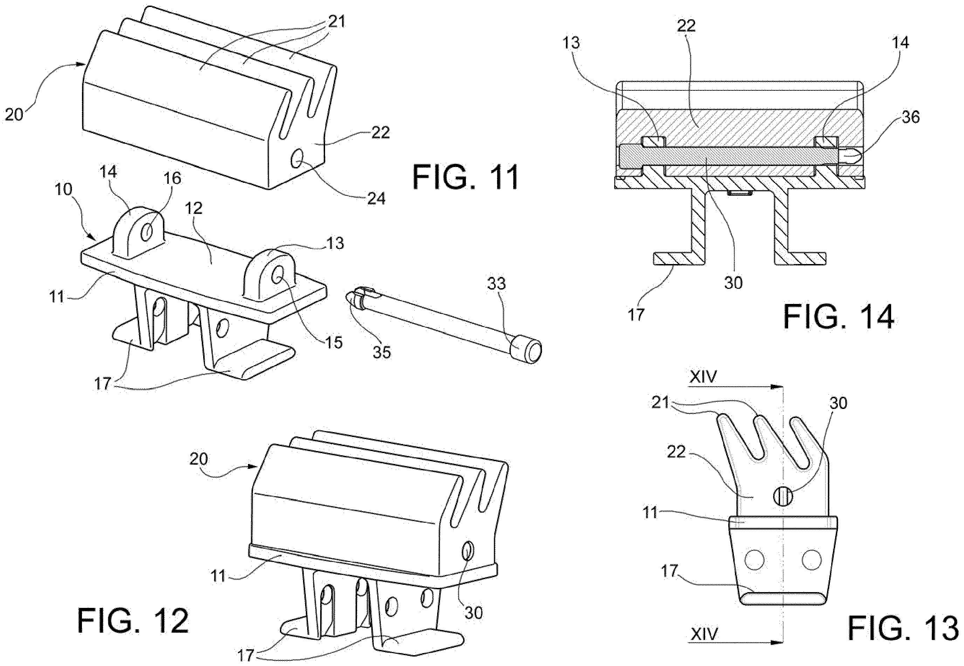

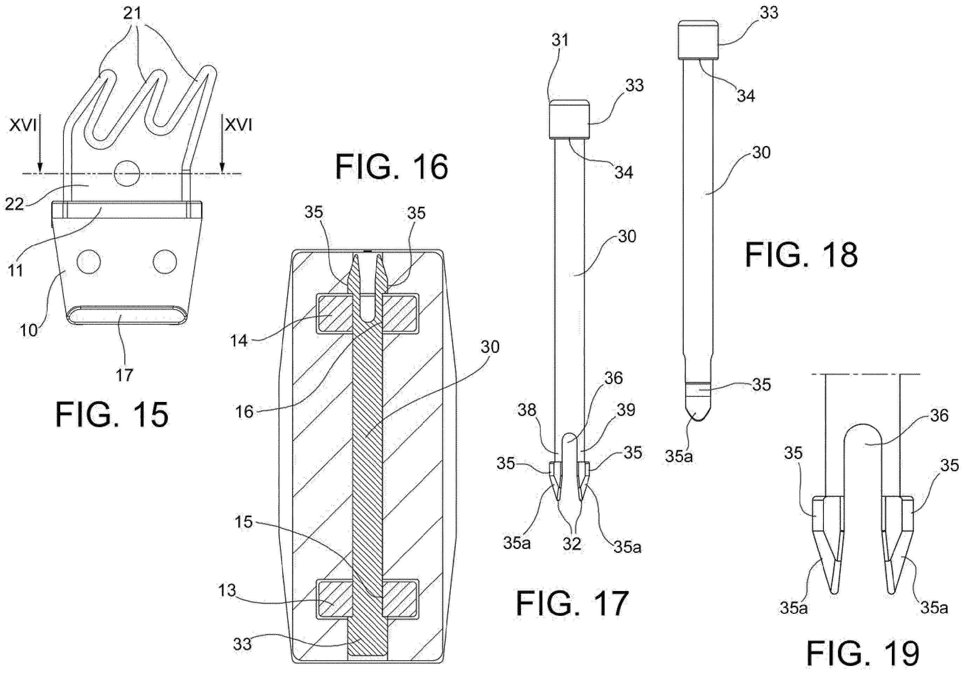

In the embodiment illustrated in Figures 11-19, the first enlarged portion 33 is formed near the first end 31 of the pin and defines a radial shoulder 34 facing the second end 32 of the pin. The second end 32 of the pin has the second enlarged portion 35. The through-slot 36 is located at the second end 32, opening thereon. A through-slot 36 extends axially along the pin 30 through and beyond the second enlarged portion 35, separating the two pin segments 38, 39, parallel and elastically compressible in a transverse direction. In this embodiment, the two pin segments 38, 39 are made as two prongs, and the second end 32 is open in a fork shape. Two tapered surfaces 35a are provided, each in the form of a prong or pin segment 38, 39; the tapered surfaces 35a are configured to cooperate with a surface provided by the through-hole 16 of the lug 14. At the passage of the pin 30, the through-hole 16 compresses and brings the two pin segments 38, 39 closer together so as to allow the second enlarged portion 35 to pass through the through-hole 16. In the assembled condition, the first enlarged portion 33 and the second enlarged portion 35 are arranged respectively on opposite sides belonging to the first 13 and the second 14 lug.

Several aspects and embodiments of the gripper assembly have been described. It is understood that each aspect or embodiment may be combined with any other aspect or embodiment. The invention, moreover, is not limited to the described embodiments, but may vary within the scope defined by the accompanying claims.

## Claims

1. A gripper assembly for a gripper chain, comprising:
a support element (10) made of plastic material forming a plate (11) with first (13) and second (14) lugs projecting from one side of the plate and having two respective through-holes (15, 16) axially aligned;
a rubber gripper pad (20) forming a base (22), a through-bore (24) extending through the base (22), a plurality of resilient protrusions (21) projecting from the base (22);
a fastening pin (30) which passes through the through-holes (15, 16) of the lugs and the through-bore (24) in the base (22), for fastening the gripper pad (20) to the support element (10);
**characterized in that** the pin (30) is made of plastic material and provides:
near a first end (31) of the pin, a first enlarged portion (33) which defines a radial shoulder (34) facing a second end (32) of the pin;
at least one second enlarged portion (35) at a position spaced from the first enlarged portion (33);
a through-slot (36) extending axially along the pin (30) through and beyond the at least one second enlarged portion (35), whereby the through-slot (36) separates two parallel pin segments (38, 39) elastically compressible in a transverse direction;
at least one tapered surface (35a, 15a) is provided either by at least one second enlarged portion (35) or by the through-hole (15), and is configured to cooperate with a surface provided respectively by the through-hole (15) or at least one second enlarged portion (35) so as to compress and bring the two pin segments (38, 39) close together and allow said second enlarged portion (35) to pass through the through-hole (15);
the gripper assembly having an assembled condition in which the first enlarged portion (33) and the at least one second enlarged portion (35) are either respectively arranged on two opposite sides of one (13) of the lugs (13, 14), or are respectively arranged on opposite sides provided by the first (13) and the second (14) lug, respectively.

2. A gripper assembly according to claim 1, wherein the tapered surface (35a) is an outer surface provided by at least one second enlarged portion (35) and is an outer surface (35a) tapering towards the second end (32) of the pin.

3. A gripper assembly according to claim 2, wherein the at least one second enlarged portion (35) also has at least one further outer surface (35b) tapered towards the first end (31) of the pin.

4. A gripper assembly according to claim 3, wherein:
said further outer surface (35b) is tapered with a given inclination, with respect to a longitudinal axis (x) of the pin (30), and
said outer surface (35a) tapering towards the second end (32) of the pin, is tapered with respect to the longitudinal axis (x) with an inclination that is less than said given inclination of the further outer surface (35b).

5. A gripper assembly according to claim 4, wherein the inclination of the further outer surface (35b) is in a range between about 120° and about 140° with respect to the longitudinal axis (x) of the pin (30).

6. A gripper assembly according to claim 4, wherein the inclination of the outer surface (35a) is in a range between about 160° and about 175° with respect to the longitudinal axis (x) of the pin (30).

7. A gripper assembly according to any one of the preceding claims, wherein the first enlarged portion (33) has an outer surface (33a) tapered towards the first end (31) of the pin.

8. A gripper assembly according to any one of the preceding claims, wherein said tapered surfaces comprise at least one of the following surfaces: conical or frusto-conical surfaces, ramps or wedge-shaped or cam surfaces.

9. A gripper assembly according to claim 1, wherein the through-hole (15) of at least one lug (13, 14) has a conical surface (15a) enlarged in an axially outward direction.

10. A gripper assembly according to claim 9, wherein the through-hole (15) of the lug (13) having the conical surface (15a) also has a further conical surface (15b) axially widening towards the other lug (14).

11. A gripper assembly according to claim 10, wherein the conical surface (15a) is tapered with respect to the longitudinal axis (x) with an inclination which is less than the inclination of the conical surface (15b) with respect to the same axis (x).

12. A gripper assembly according to any one of the preceding claims, wherein the through-slot (36) has a transverse widening (37) at the at least one second enlarged portion (35).

13. A gripper assembly according to any one of the preceding claims, wherein the pin (30) forms two second transversely enlarged portions (35), each arranged on a respective one of the two pin segments (38, 39).

14. A gripper assembly according to any one of claims 1 to 12, wherein the pin (30) forms a single, second transversely enlarged portion (35) arranged on only one of the two pin segments (38, 39).

15. A gripper assembly according to any one of the preceding claims, wherein the through-slot (36) extends through the second end (32) of the pin, whereby the two parallel and elastically compressible pin segments (38, 39) are shaped as two prongs and the second end (32) is fork-shaped.

16. A gripper assembly according to any one of claims 1 to 14, wherein the through-slot (36) is shaped as a keyhole adjacent to the first end (31) of the pin.
